# EUROPEAN PATENT SPECIFICATION

(11) **EP 1 647 738 B1**
(45) Date of publication and mention of the grant of the patent: **04.07.2007**
(21) Application number: 04425781.4
(22) Date of filing: 15.10.2004
(51) Int. Cl.: F16H 7/18

(54) **Guide device for the chain of the timing system of an internal combustion engine, in particular of a V-engine**
Einrichtung zur Führung der Steuerkette einer Brennkraftmaschine, insbesondere einer Brennkraftmaschine mit V-Zylinderanordnung
Dispositif de guidage de la chaîne de distribution d'un moteur à combustion interne, en particulier d'un moteur en V

(43) Date of publication of application: 19.04.2006
(73) Proprietor: Morse Tec Europe S.r.l., 20121 Milano (IT)
(72) Inventor: Covini, Lorenzo, 20121 Milano (IT); Carugati, Massimo, 20059 Vimercate (Milano) (IT)
(74) Representative: Coggi, Giorgio

(56) References cited:
- DE-A1- 10 331 264
- US-A- 6 106 423
- US-A1- 2004 058 761
- US-A1- 2004 200 447
- US-B1- 6 585 614
- PATENT ABSTRACTS OF JAPAN vol. 2002, no. 11, 6 November 2002 (2002-11-06) -& JP 2002 213541 A (HONDA MOTOR CO LTD), 31 July 2002 (2002-07-31)
- PATENT ABSTRACTS OF JAPAN vol. 1998, no. 12, 31 October 1998 (1998-10-31) -& JP 10 184380 A (SUZUKI MOTOR CORP), 14 July 1998 (1998-07-14)
- PATENT ABSTRACTS OF JAPAN vol. 2002, no. 11, 6 November 2002 (2002-11-06) -& JP 2002 213251 A (HONDA MOTOR CO LTD), 31 July 2002 (2002-07-31)
- PATENT ABSTRACTS OF JAPAN vol. 1998, no. 02, 30 January 1998 (1998-01-30) -& JP 09 273429 A (DAIHATSU MOTOR CO LTD), 21 October 1997 (1997-10-21)

## Description

The present invention refers to a guide device for the transmission means belonging to the timing system of an internal combustion engine, in particular of a V-engine.

A timing system of an internal combustion engine can be timed by means of a chain transmission, wherein the chain is wound on one or more sprockets, one of which is a drive sprocket and takes its drive (even indirectly) from the drive shaft to transmit it to one or more shafts.

In an internal combustion engine the intake and exhaust camshafts (the intake and exhaust camshafts of each cylinder block if the engine comprises more than one cylinder block) are moved by a chain transmission which, in the area between the camshafts, is supported by a guide device - known to the art as "cam to cam guide" - consisting of a supporting structure which bears a sliding surface on which the chain slides.

In engines comprising two cylinder blocks arranged as a V, in which the intake and exhaust camshafts have different heights, the shapes of the sliding surfaces are specular to each other, i.e. they are symmetrical with respect to a central axis and are rotated 180° with respect to each other: they are in two positions mirror images of each other.

It is not possible, therefore, to use the same guide device for both cylinder blocks, with a consequent increase in production, transport and storage costs for the guide devices, for the type of parts to supply to the production line and to manage as spares, for the relative warehouses, etc.

US 2004/200447 discloses a supporting structure for an engine timing chain comprising a supporting structure (preferably a cam cap fixing an intake and an exhaust camshaft to the cylinder head of the engine), a chain guide limiting the vertical movement of the timing chain and means suitable to couple the chain guide to the supporting structure.

DE-A-103 31 264 shows a guide device with all the features of the preamble of independent claim 1.

Object of the present invention is to provide a "cam to cam" guide suitable to overcome the aforementioned drawbacks and it is achieved by producing a guide device having the characteristics of appended independent claim 1; further characteristics of the invention are apparent from the dependent claims.

Essentially, according to the invention, a "cam to cam" guide comprises a supporting structure to be fixed to the engine body, a body bearing the sliding surface on which the chain slides and coupling means which allow the body to be mounted on the supporting structure in two positions specular to each other in shape.

Further characteristics of the invention will be made clearer by the detailed description that follows, referring to a purely exemplifying and therefore non-limiting embodiment thereof, illustrated in the appended drawings, in which:
- Figure 1 shows diagrammatically the guide chains of the two cylinder blocks of a V-engine and the "cam to cam" guides relating to said chains;
- Figure 2 shows diagrammatically two perspective views of the supporting structure of a "cam to cam" guide made according to the invention;
- Figure 3 shows diagrammatically two perspective views and an enlarged side view of the body of a "cam to cam" guide, made according to the invention, which bears the sliding surface for a chain;
- Figure 4 illustrates diagrammatically two perspective views of one of the "cam to cam" guides of Figure 1, in which the body of Figure 3 is mounted on the supporting structure of Figure 2.

In the appended drawings corresponding elements are identified by means of the same reference numerals.

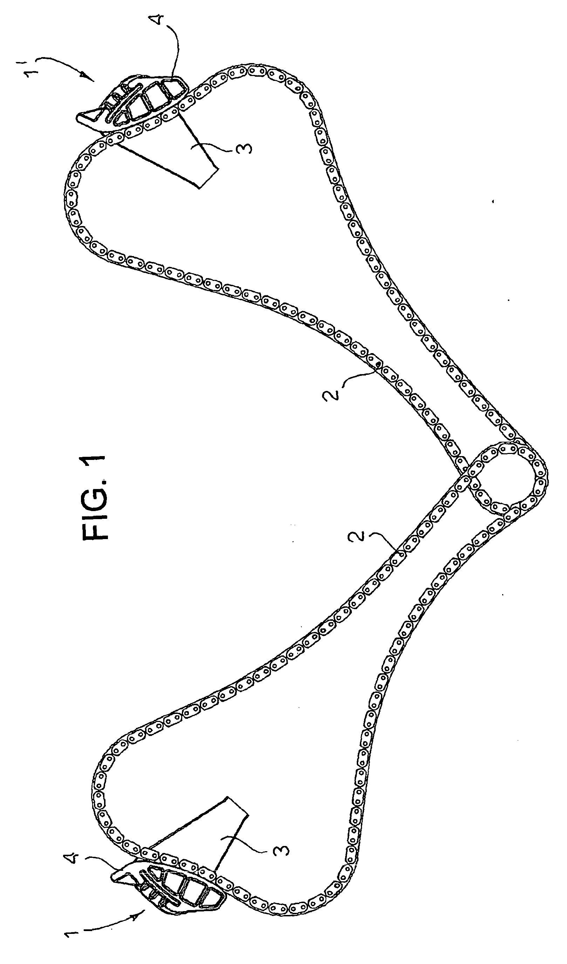

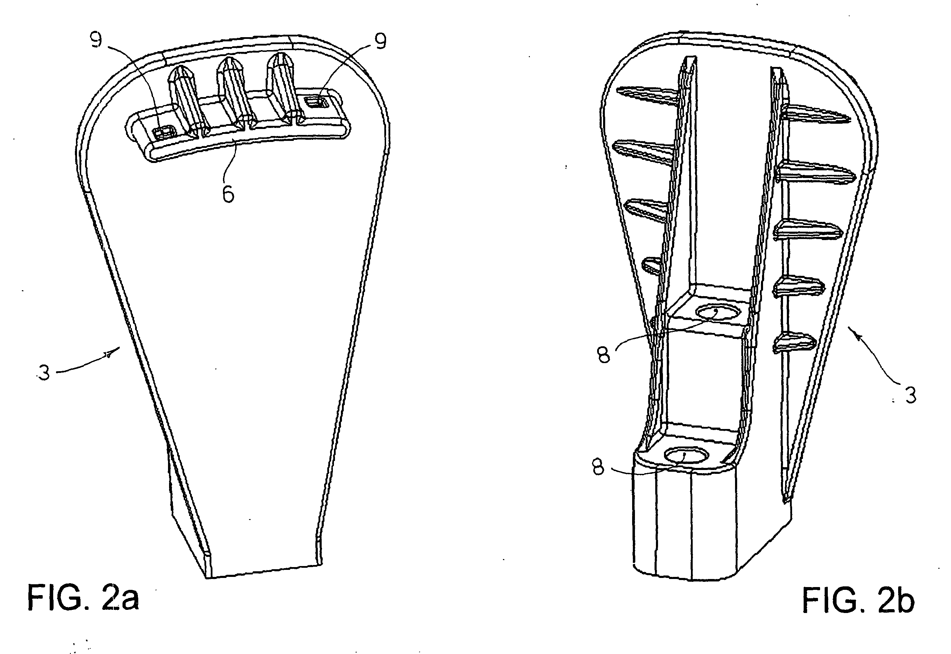

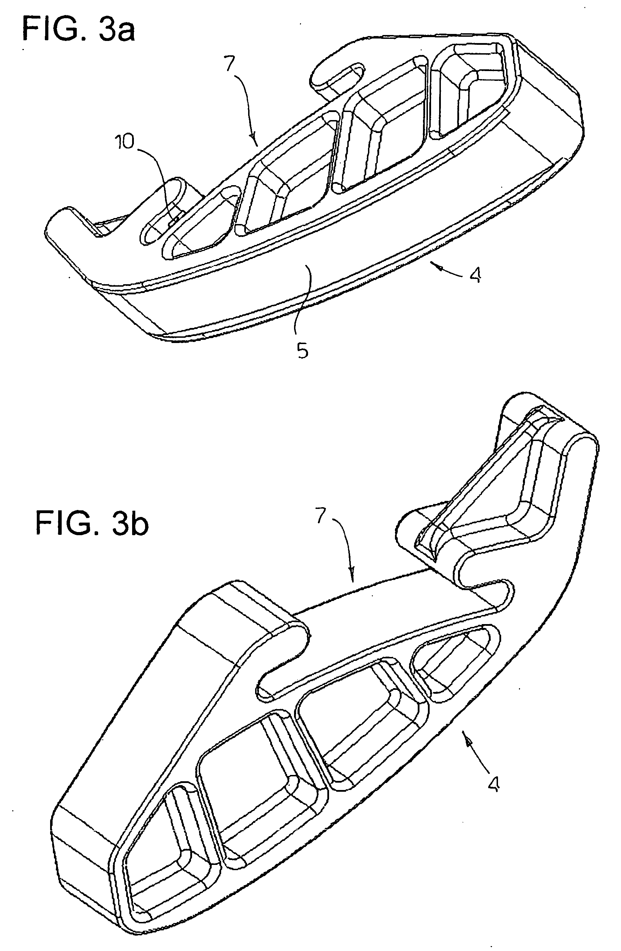

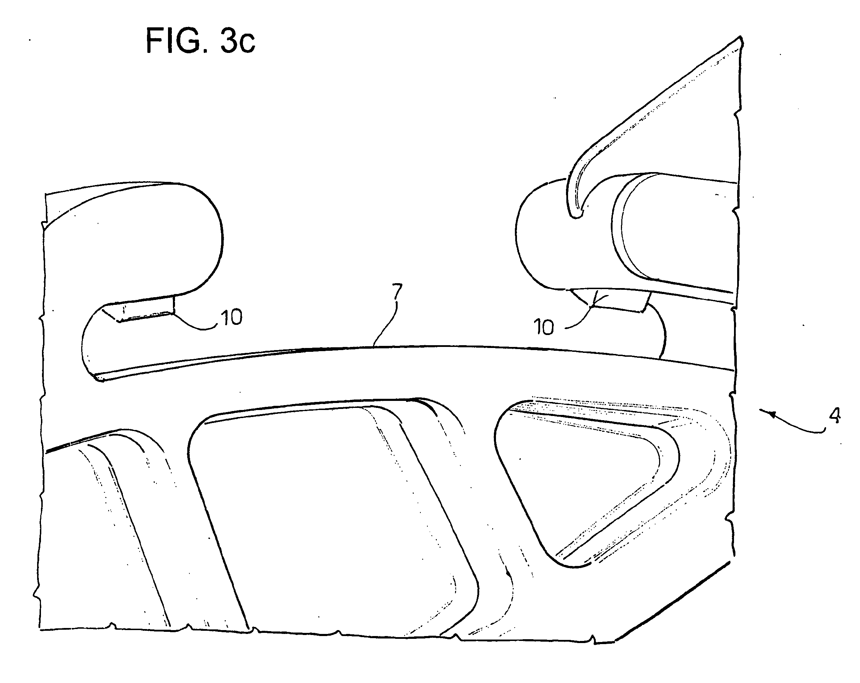

Figure 1 shows diagrammatically the chains 2, driven by the drive shaft, which drive the camshafts of the two cylinder blocks of a V-engine and the guide devices (1, 1') relating to said chains 2; as can be seen from Figure 1, the guide devices (1, 1') are specular to each other and each of them comprises a supporting structure 3, fixed in a per sé known manner to the engine body, which carries a body 4; the body 4 bears the sliding surface 5 (Figure 3) of one of the chains 2 and coupling means (Figures 2-4) able to allow the body 4 to be mounted on the supporting structure 3 in two positions specular to each other.

The body 4 is advantageously made of aluminium or of plastic material reinforced with fibreglass and the sliding surface 5 is made of plastic material with a low coefficient of friction.

For the sake of simplicity of the graphic representation, in Figure 1 the engine body, the drive shaft and the camshafts have been omitted.

Figure 2 shows diagrammatically two perspective views of a supporting structure 3 made according to the invention; in particular, Figure 2a shows the side of the supporting structure 3 visible in Figure 1, whilst Figure 2b shows the opposite side, which carries per sé know means for fixing the supporting structure 3 to the engine body.

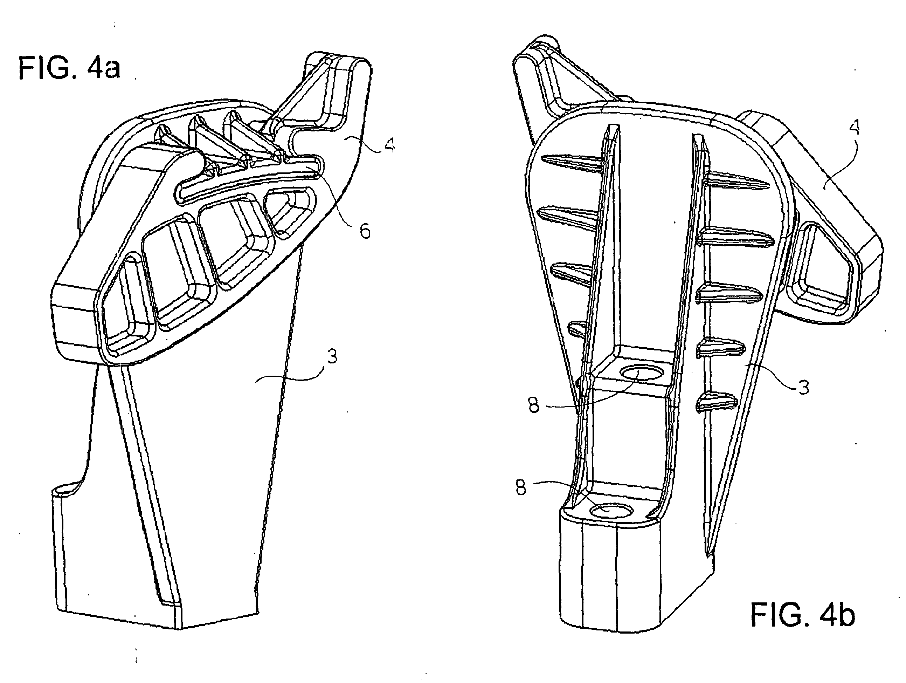

In Figure 2b said fixing means (also visible in Figure 4b) consist of two perforated flanges 8 in which a bolt (or other functionally equivalent fixing means, per sè known and therefore not described) connecting the supporting structure 3 to the engine body is inserted.

From 2a it can be seen that the supporting structure 3 has, at one end, a protruding body (or bracket) 6, substantially at right angles to the longitudinal axis of the supporting structure 3 and able to engage - as shown in Figure 4a - in a seat 7 (Figure 3) formed on the side of the body 4 opposite to that in which the sliding surface 5 for the chain 2 is formed; the bracket 6 and the seat 7 of the body 4 are symmetrical in shape with respect to their transverse axis, which allows the body 4 to be applied to the supporting structure 3 in two positions specular to each other.

Figure 2a furthermore shows that in the preferred embodiment described herein, on the top surface of the bracket 6 there is preferably a pair of hollows 9, in which - to constrain the body 4 more firmly to the supporting structure 3 - a pair of teeth 10 (having a shape and an arrangement complementary to that of the hollows 9; Figure 3c) present on the inner surface of the seat 7 of the body 4 engages; furthermore, one of the teeth 10 can be seen partially in Figure 3a.

The hollows 9 and the teeth 10 are advantageously hemi symmetric with respect to the longitudinal axis of the bracket 6 and of the body 4, respectively, and can be omitted without departing from the scope of the invention.

Figure 3 shows diagrammatically two perspective views of the body 4, made according to the invention, which bears the sliding surface 5 for the chain 2 (Figure 3a) and which has, on the side of the body 4 opposite to that in which the sliding surface 5 is formed, the seat 7, which can be seen better in Figure 3b.
One of the teeth 10 is partially visible in Figure 3a.

Figure 4 shows diagrammatically two perspective views of the guide device 1 of Figure 1, in which the body 4 of Figure 3 is mounted on the supporting structure 3 of Figure 2.

The guide device 1' of Figure 1, omitted for the sake of simplicity of the graphic representation, has a specular structure with respect to that of the device 1 and is made by mounting the body 4, rotated 180° with respect to the position shown in Figure 4, on the supporting structure 3.

Figure 4a shows the body 4 mounted on the supporting structure 3 by inserting the bracket 6 of the supporting structure 3 in the seat 7 of the body 4, seat that is not visible in Figure 4a because it is occupied by the bracket 6.

Figure 4b shows the rear part of the supporting structure 3, which carries the body 4 and the means 8 - already illustrated with reference to Figure 2a - for fixing the supporting structure 3 to the engine body.

In the embodiment described herein, said means 8 consist of two perforated flanges in which is inserted a bolt (or other functionally equivalent means, per sè know and therefore not described) which connects the supporting structure 3 to the engine body but, without departing from the scope of the invention, they can be replaced by other known fixing means suited to the purpose.

Without departing from the scope of the invention, a person skilled in the art can make to the guide device to which the present invention refers all the changes and the improvements suggested by experience and by the natural evolution of the art.

## Claims

1. A guide device (1, 1') for a chain (2) belonging to the timing system of an internal combustion engine, in particular of a V-engine, comprising:
- a supporting structure (3), able to be fixed to the engine body;
- a body (4), bearing a sliding surface (5) on which a chain (2) is able to slide;
- coupling means, able to allow the body (4) to be mounted on the supporting structure (3) in two positions rotated of 180° with respect to each other around the longitudinal axis of the supporting structure (3), which are mirror images of each other;
**characterised in that** the coupling means comprise at least one bracket (6), present at one end of the supporting structure (3) and able to engage in a seat (7) formed on the side of the body (4) opposite to that in which the sliding surface (5) for the chain (2) is formed, the bracket (6) and the seat (7) having a symmetrical shape with respect to their transverse axis designed to allow the at least one bracket (6) to engage in the seat (7) in two positions rotated of 180° with respect to each other around the longitudinal axis of the supporting structure (3), which are mirror images of each other.

2. A guide device (1, 1') as in claim 1, **characterised in that** the bracket (6) is at right angles to the longitudinal axis of the supporting structure (3).

3. A guide device (1, 1') as in claim 1, **characterised in that** the coupling means further comprise a pair of hollows (9) present on the upper surface of the bracket (6) and a pair of teeth (10) with a shape complementary to that of the hollows (9) present on the inner surface of the seat (7) of the body (4) and able to engage with the hollows (9).

4. A guide device (1, 1') as in claim 3, **characterised in that** the hollows (9) and the teeth (10) are hemi-symmetrical with respect to the longitudinal axis of the bracket (6) and of the body (4), respectively.

5. A guide device (1, 1') as in claim 1, **characterised in that** the supporting structure (3) has, on the opposite surface to that which carries the bracket (6), means (8) designed to fix the supporting structure (3) to the body of the engine.

6. A guide device (1, 1') as in claim 1, **characterised in that** the body (4) is made of aluminium or of plastic material reinforced with fibreglass and **in that** the sliding surface (5) is made of plastic material with a low coefficient of friction.

## Patentansprüche

1. Führungseinrichtung (1, 1') für eine Kette (2), die zum Steuersystem einer Brennkraftmaschine, insbesondere einer Brennkraftmaschine mit einer V-Zylinderanordnung, gehört, umfassend:
- eine Stützstruktur (3), die an dem Motorkörper befestigt werden kann;
- einen Körper (4), der eine Gleitfläche (5) trägt, auf der eine Kette (2) gleiten kann;
- Verbindungsmittel, die in der Lage sind, die Anbringung des Körpers (4) an der Stützstruktur (3) in zwei Positionen zu ermöglichen, die zueinander um 180° um die Längsachse der Stützstruktur (3) gedreht sind und zueinander spiegelbildlich sind;
**dadurch gekennzeichnet, dass** die Verbindungsmittel wenigstens eine Konsole (6) umfassen, die an einem Ende der Stützstruktur (3) angeordnet ist und in der Lage ist, in einen Sitz (7) einzugreifen, der auf der Seite des Körpers (4) ausgebildet ist, die der Seite gegenüberliegt, auf der die Gleitfläche (5) für die Kette (2) ausgebildet ist, wobei die Konsole (6) und der Sitz (7) eine symmetrische Form in Bezug auf ihre Querachse aufweisen, was dazu dient, es der wenigstens einen Konsole (6) zu ermöglichen, in den Sitz (7) in zwei Positionen einzugreifen, die zueinander um 180° um die Längsachse der Stützstruktur (3) gedreht sind und zueinander spiegelbildlich sind.

2. Führungseinrichtung (1, 1') nach Anspruch 1, **dadurch gekennzeichnet, dass** die Konsole (6) in einem rechten Winkel zu der Längsachse der Stützstruktur (3) angeordnet ist.

3. Führungseinrichtung (1, 1') nach Anspruch 1, **dadurch gekennzeichnet, dass** die Verbindungsmittel des Weiteren Folgendes umfassen: ein Paar Ausnehmungen (9), die auf der Oberseite der Konsole (6) angeordnet sind; und ein Paar Zähne (10) mit einer Form, die zu der Form der Ausnehmungen (9) komplementär sind, die auf der Innenseite des Sitzes (7) des Körpers (4) angeordnet sind und in die Ausnehmungen (9) eingreifen können.

4. Führungseinrichtung (1, 1') nach Anspruch 3, **dadurch gekennzeichnet, dass** die Ausnehmungen (9) und die Zähne (10) in Bezug auf die Längsachse der Konsole (6) bzw. des Körpers (4) hemisymmetrisch sind.

5. Führungseinrichtung (1, 1') nach Anspruch 1, **dadurch gekennzeichnet, dass** die Stützstruktur (3) auf der Seite, die der Seite gegenüberliegt, welche die Konsole (6) trägt, Mittel (8) aufweist, die dafür vorgesehen sind, die Stützstruktur (3) an dem Körper der Brennkraftmaschine zu befestigen.

6. Führungseinrichtung (1, 1') nach Anspruch 1, **dadurch gekennzeichnet, dass** der Körper (4) aus Aluminium oder aus glasfaserverstärktem Kunststoffmaterial besteht und dass die Gleitfläche (5) auf einem Kunststoffmaterial mit einem niedrigen Reibungskoeffizienten besteht.

## Revendications

1. Dispositif de guidage (1, 1') pour une chaîne (2) appartenant au système de synchronisation d'un moteur à combustion interne, en particulier d'un moteur en V, comprenant :
- une structure de support (3) capable d'être fixée au corps du moteur ;
- un corps (4), portant une surface coulissante (5) sur laquelle une chaîne (2) est capable de coulisser ;
- des moyens d'accouplement capables de permettre au corps (4) d'être monté sur la structure de support (3) à deux positions tournées de 180° l'une par rapport à l'autre autour de l'axe longitudinal de la structure de support (3), qui sont des images en miroir l'une de l'autre ;
**caractérisé en ce que** les moyens d'accouplement comprennent au moins un support (6) présent à une extrémité de la structure de support (3) et capable de se mettre en prise dans un siège (7) formé sur le côté du corps (4) à l'opposé de celui dans lequel la surface coulissante (5) pour la chaîne (2) est formée, le support (6) et le siège (7) ayant une forme symétrique par rapport à l'axe transversal conçue pour permettre à au moins un support (6) de se mettre en prise dans le siège (7) à deux positions tournées de 180° l'une par rapport à l'autre autour de l'axe longitudinal de la structure de support (3), qui sont des images en miroir l'une de l'autre.

2. Dispositif de guidage (1, 1') selon la revendication 1, **caractérisé en ce que** le support (6) est en angle droit avec l'axe longitudinal de la structure de support (3).

3. Dispositif de guidage (1, 1') selon la revendication 1, **caractérisé en ce que** les moyens d'accouplement comprennent en outre une paire de creux (9) présents sur la surface supérieure du support (6) et une paire de dents (10) de forme complémentaire à celle des creux (9) présentes sur la surface intérieure du siège (7) du corps (4) et capables de se mettre en prise avec les creux (9).

4. Dispositif de guidage (1, 1') selon la revendication 3, **caractérisé en ce que** les creux (9) et les dents (10) sont hémi-symétriques par rapport à l'axe longitudinal du support (6) et du corps (4) respectivement.

5. Dispositif de guidage (1, 1') selon la revendication 1, **caractérisé en ce que** la structure de support (3) a, sur la surface opposée à celle qui porte le support (6), des moyens (8) conçus pour fixer la structure de support (3) sur le corps du moteur.

6. Dispositif de guidage (1, 1') selon la revendication 1, **caractérisé en ce que** le corps (4) est en aluminium ou en matière plastique renforcée de fibre de verre et **en ce que** la surface coulissante (5) est en matière plastique avec un faible coefficient de frottement.
